# EUROPEAN PATENT SPECIFICATION

(11) **EP 2 658 874 B1**
(45) Date of publication and mention of the grant of the patent: **07.11.2018**
(21) Application number: 11853813.1
(22) Date of filing: 30.12.2011
(51) Int. Cl.: C08B 3/12, C08B 3/20, C08B 3/22

(54) **METHOD OF PRODUCING HYDROPHOBIC MICROFIBROUS CELLULOSE**
VERFAHREN ZUR HERSTELLUNG VON HYDROPHOBER MIKROFASERZELLULOSE
PROCÉDÉ DE PRODUCTION DE CELLULOSE MICROFIBREUSE HYDROPHOBE

(30) Priority: 30.12.2010 FI 20106385
(43) Date of publication of application: 06.11.2013
(73) Proprietor: Aalto University Foundation sr, 00076 Aalto (FI)
(72) Inventor: SALMINEN, Arto, FI-00076 Aalto (FI)
(74) Representative: Seppo Laine Oy
(86) International application number: PCT/FI2011/051173
(87) International publication number: WO 2012/089929

(56) References cited:
- WO-A1-2012/152997
- GB-A- 691 364
- JP-A- 2010 106 251
- L.C. TOMÉ ET AL.: GREEN CHEMISTRY, vol. 13, 18 July 2011 (2011-07-18), pages 2464-2470, XP002726098,
- SERRANO L ET AL: "Modified cellulose microfibrils as benzene adsorbent", DESALINATION, ELSEVIER, AMSTERDAM, NL, vol. 270, no. 1, 23 November 2010 (2010-11-23), pages 143-150, XP028148064, ISSN: 0011-9164, DOI: 10.1016/J.DESAL.2010.11.038 [retrieved on 2010-11-27]
- YUAN ET AL.: 'Surface acylation of cellulose whiskers by drying aqueous emulsion' BIOMACROMOLECULES vol. 7, no. 3, March 2006, pages 696 - 700, XP055124715

## Description

### Field of the invention

The present invention relates to a method of manufacturing hydrophobic microfibrillated cellulose.

### Description of prior art

The special features of microfibrillated cellulose (MFC) make it an interesting material for various industrial sectors (see, for example, Pääkkö, M., Ankerfors, M., Kosonen, H., Nykanen, A., Ahola, S., Osterberg, M., Ruokolainen, J., Laine, J., Larsson, P.T., Ikkala, O., Lindström, T., Enzymatic Hydrolysis Combined with Mechanical Shearing and HighPressure Homogenization for Nanoscale Cellulose Fibrils and Strong Gels, Biomacromolecules 8 (2007) 1934-1941). The high ability of unmodified MFC to make hydrogen bonds and to form films makes it difficult to utilize on a large scale. The transportation of ordinary unmodified microfibrillated cellulose is very unprofitable, since after the manufacture, it is in a weak aqueous solution that comprises up to 98.5% of water. For the sake of industrial exploitation, it is also important that the properties of MFC can be modified in the manner required by its targets of application, preferably in connection with the manufacture. For example, the compatibility of MFC with matrix materials in composites is a critical factor, when composites with high-quality mechanical properties are to be manufactured. Typically, the compatibility with hydrophobic matrix polymers is improved by the chemical modification of MFC.
The modification of MFC takes place through the reactive hydroxyl groups of cellulose, whereby reactive or hydrophobic groups can be attached to the surface of the fibres. Cellulose is typically modified, among others, by means of silanes, isocyanates, and anhydrides through a solvent exchange, like in the publication Stenstad P., et al. (Stenstad, P., Andresen, M., Tanem, B., Stenius, P., Chemical surface modifications of microfibrillated cellulose, Cellulose 15 (2008) 35-45). Since, after the grinding, the microfibrillated cellulose is in an aqueous suspension, the above-mentioned methods require that a solvent exchange to an organic solvent is carried out for the cellulose. The reactions mentioned above are not possible without the solvent exchange.

Of these typical methods, silylation is used, among others, in the publications Andresen M., et al. (Andresen, M., Johansson, L.-S., Tanem, B., Stenius, P., Properties and characterization of hydrophobized microfibrillated cellulose, Cellulose 13 (2006) 665-677), and Lu J., et al. (Lu, J., Askeland, P., Drzal, L., Surface modification of microfibrillated cellulose for epoxy composite applications, Polymer 49 (2008) 1285-1296).

The acetylation of cellulose, is turn, is described in the publication Tingaut P., et al. (Tingaut, P., Zimmermann, T., Lopez-Suevos, F., Synthesis and Characterization of Bionanocomposites with Tunable Properties from Poly(lactic acid) and Acetylated Microfibrillated Cellulose, Biomacromolecules 11 (2010) 454-464). No hydrophobization of the surface is achieved by this, however.

The modification of microfibrillated cellulose that takes place through the solvent exchanges is difficult to implement, on an industrial scale, due to the number of solvent exchange steps required. Typically, 5-10 solvent exchange steps are needed to reduce the amount of water to a low enough level for the reactions.

Cellulose is also modified in an aqueous suspension by means of various amines, utilizing the TEMPO oxidation, like in the Lasseuguette publication (Lasseuguette, E., Grafting onto microfibrils of native cellulose, Cellulose 15 (2008) 571-580). When cellulose is modified by means of the TEMPO oxidation, the medium of the suspension does not need to be converted into an organic solvent. Although cellulose can be modified in the aqueous environment by means of the TEMPO oxidation, a profitable exploitation of the method on the industrial scale is challenging, since the manufacture of the end product requires many reaction steps, the purification and homogenisation of the intermediate products and the adjustment of the pH value of the reaction mixture during the reaction.

Consequently, the TEMPO oxidation is a complex method with several stages; therefore, naturally, part of the yield is lost and the manufacturing process inevitably becomes expensive.
It is known that the chemical modification of also other conventional fibre products has been studied.
WO 2008145827 A1 discloses a fibre product, to which modified starch is added. The modified starch is prepared by allowing the starch to react with octenyl succinic anhydride. In the manufacturing method, the starch is dried by azeotropic distillation with toluene before adding the succinic anhydride.
JP 2010106251 A discloses a hydrophobized cellulose fibre. For the hydrophobization of the fibre, succinic anhydride is used, to which a C10-C30 aliphatic alkyl group is linked.

From US 4859720 A, a composition for the sizing agent of paper is known, and a method of manufacturing the same. Alkenyl succinic anhydride can be used as the sizing agent. The method also mentions the use of toluene in preparing the composition, and the azeotropic distillation in drying the composition.

From US 4035235 A, the manufacture of lipophilic starch by linking to it an n-octenyl succinic acid radical is known.
The publications mentioned above neither describe the modification of microfibrillated cellulose or nanocellulose, nor the simple method similar to the present invention for the manufacture of such modified micro fibrillated cellulose of nanocellulose.

### Short description of the invention

An object of the present invention is to provide a new method of modifying microfibrillated cellulose or nanocellulose.

Particularly, it is an object of the present invention to provide a new and simple method of hydrophobizing microfibrillated cellulose or nanocellulose, with good yields.
The present invention thus relates to a method of manufacturing hydrophobic microfibrillated cellulose, wherein an organic hydrophobization reagent is made to react with the substituents that are on the surface of the microfibrillated cellulose.
To be more precise, the method according to the present invention is characterised by what is presented in the characterising part of Claim 1.

The advantages provided by the invention include that an extremely hydrophobic material is obtained, which maintains the tensile strength characteristic of chemical pulp, among others; and that the strength of the end product possibly even increases, applies to the matrix structures, for example. Neither does the succinic anhydride derivative that is used lead to changes in the process or the equipment, when the method, according to the invention, is used in the chemical pulp industry, since succinic anhydrides are already used for various purposes in this industry; nor does it require pressure vessels or additional lines to be used. Another advantage of the method according to the invention is that the method neither requires the use of a catalyst, nor an adjustment of the pH value during the reaction. Furthermore, an increase in the temperature is necessary in connection with distillation only.

In the present method, the reaction is carried out by one single reaction step, which is followed by dewatering by the azeotropic distillation.

### Short description of drawings

Figure 1 is a drawing that shows an example of the modification of MFC with alkenyl succinic anhydride as a multiphase reaction.
Figure 2 shows the measurement results of the contact angle of water on the surface of MFC powder that is modified with the octadecenyl succinic anhydride of MFC and on the surface of pressed MFC that is OSA-modified.
Figure 3 is the FTIR spectrum of microfibrillated cellulose.
Figure 4 is the FTIR spectrum of octadecenyl succinic anhydride.
Figure 5 is the FTIR spectrum of hydrolyzed octadecenyl succinic anhydride.
Figure 6 is the FTIR spectrum of microfibrillated cellulose that is modified with octadecenyl succinic anhydride.
Figure 7 is the FTIR spectrum of tetradecenyl succinic anhydride.
Figure 8 is the FTIR spectrum of hydrolyzed tetradecenyl succinic anhydride.
Figure 9 is the FTIR spectrum of microfibrillated cellulose that is modified with tetradecenyl succinic anhydride.

### Detailed description of the preferred embodiments of the invention

Surprisingly, it has been observed that microfibrillated cellulose (MFC) can effectively be hydrophobized by means of alkenyl succinic anhydrides (ASA), avoiding the impractical solvent exchange steps. Furthermore, by means of the method, the number of reaction steps can be minimized, since the modification of MFC by means of ASA requires one reaction step only.

The present invention thus relates to a method of manufacturing hydrophobic microfibrillated cellulose, wherein an organic hydrophobization reagent is made to react with the substituents that are on the surface of the microfibrillated cellulose.

This method is characterised in that the reaction is carried out in a reaction mixture, which is in the form of an aqueous dispersion, by using, as the hydrophobization reagent, one or more alkenyl succinic anhydrides that are dissolved in or mixed with an organic solvent, and by carrying out an azeotropic distillation, whereby the reaction mixture is dewatered.

In a preferred embodiment, the azeotropic distillation is an integrated part of the modification method and, thus, also part of the reaction. Before the distillation, the reaction mixture is, typically, refluxed to mix the aqueous phase and the organic phase together, whereby a homogeneous mixture or dispersion can be formed. After carrying out the homogenization, the reaction mixture is a difficult to handle, stiff, foamy emulsion or dispersion, which essentially changes its essence during the distillation. The distillation is carried out at the final stage of the reaction. If no distillation is carried out, the product is a sticky substance that is difficult to clean and handle.

It seems that ASA reacts partly with MFC already during the reflux, but the reaction is not completed until the water exits the system as a result of the azeotropic distillation - however, this is one possibility only, and the invention is not limited to the presented observation. In the sense presented above, however, the reaction and the distillation form an entity, the subprocesses or subcomponents of which are difficult to separate from each other.

The alkenyl succinic anhydride preferably has a C8-C20 alkenyl chain. It is more preferably octenyl succinic anhydride (C8), dodecenyl succinic anhydride (C12), tetradecenyl succinic anhydride (C14) or octadecenyl succinic anhydride (C18), all of which reagents are readily available and which yield essentially powdery modified cellulose. The succinic anhydride derivative that is most preferably used is tetradecenyl succinic anhydride (C14) or octadecenyl succinic anhydride (C18), which provides an effective and functioning reaction and which yields products that have particularly good properties. In particular, octadecenyl succinic anhydride can be used, which is a compound safe to handle.

In addition to the microfibre products, the term "microfibrillated cellulose" is intended to cover nanocelluloses, in particular. At least 70%, preferably 80-95% of the substituents on the surface of the microfibrillated cellulose are OH groups. In the hydrophobization reaction, according to the invention, these OH groups form ester bonds, in particular.

According to a preferred embodiment of the invention, the hydrophobization reagent is made to react with the substituents on the surface of the microfibrillated cellulose, so that at least 10 mol %, preferably 30-130 mol %, most preferably 30-60 mol % of the reagent are added to the reaction mixture. The content of the alkenyl chains of the end product can be adjusted by changing the amount of anhydride that is used as the reagent.

For the reaction, alkenyl succinic anhydride, which is dissolved in an essentially nonpolar organic solvent that forms an azeotrope with water, is added to the aqueous dispersion of microfibrillated cellulose. Examples of these include toluene, n-butyl acetate, pyridine, and benzene. Of these, toluene is especially suitable for use due to its availability and relative harmlessness. The azeotropic distillation of the method is thus carried out at a temperature, at which this azeotrope boils. In the case of toluene, this temperature is 85 °C.
It should be mentioned that, generally, MFC cannot be dried at intervals and then, again, dissolved/dispersed in a new medium. Furthermore, to advance the reaction, ASA should be converted into the form of a solvent. It should also be stated that water disturbs the esterification reaction, in particular, and water should preferably be removed for the reaction to take place as effectively as possible. The latter is carried out by the azeotropic distillation, whereby water is removed as an azeotrope. The present solvent, such as toluene and a similar nonpolar organic solvent, is preferable, among others, because it can provide both the dissolving of ASA and the dewatering at the end stage of (or after) the reaction, as stated above.

The fibres of the micro fibrillated cellulose that is modified in the invention preferably have a diameter of less than 30 nm, preferably 4-10 nm, and they can have a length of up to several micrometres. These can, however, form bundles of a diameter of as much as hundreds of nanometres.
The material, according to the invention, is cellulose that contains nonpolar lateral branches that are insoluble in water. The water-insoluble lateral branches can be alkyl or alkenyl chains, which have different lengths and which attach to the cellulose chains with an ester bond, when the succinic anhydride groups and the hydroxyl groups of cellulose react. The following formulas show typical starting materials of hydrophobically modified MFC.

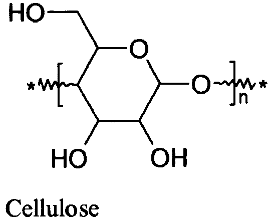

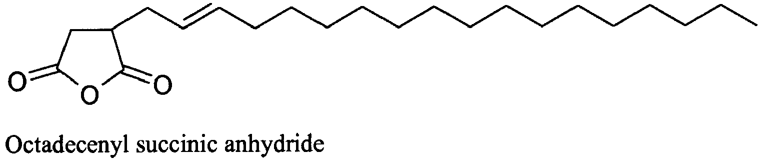

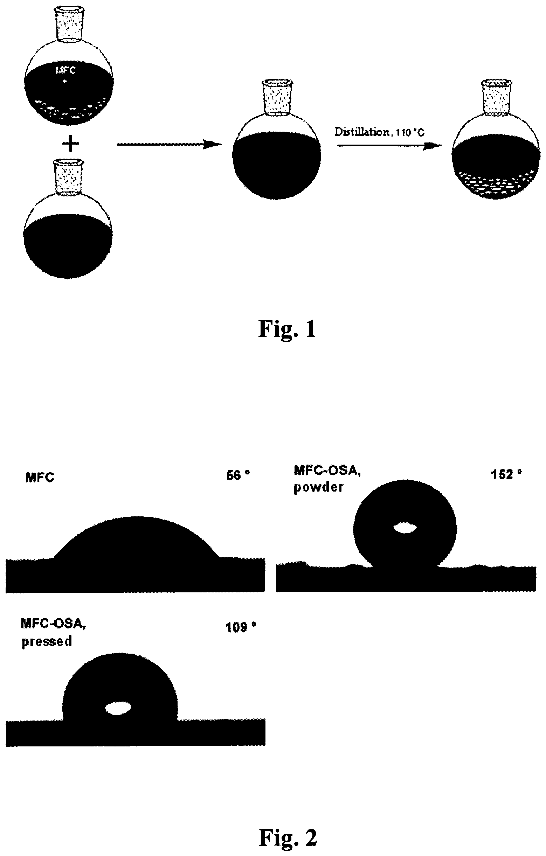

When MFC is modified by means of alkenyl succinic anhydrides, a mixture of an organic ASA solution and an aqueous phase is formed. The water that disturbs the reaction is removed from the mixture by means of the azeotropic distillation. Figure 1 shows the principle of the modification of MFC that is carried out with ASA.

In the reaction, ASA functions both as the reagent and the emulsifier. ASA reacts with the hydroxyl groups of the cellulose that is dispersed in the aqueous phase but, at the same time, it advances the mixing of the organic phase and the aqueous phase together. When water is removed by the azeotropic distillation, ASA covalently attaches itself to the cellulose.

In the determination of the hydrophobicity, the contact angle of a water drop is preferably utilized. The surface of the microfibrillated cellulose fibre that is modified, according to the invention, is most preferably so hydrophobic that the contact angle of the water drop, which is applied onto the surface of the layer that is made of the microfibrillated cellulose, with the surface of the layer is at least 90 degrees, preferably at least 100 degrees, most preferably over 120 degrees, especially over 140 degrees or as much as 150 degrees or more.

The modified MFC products are typical of consisting of strongly hydrophobic materials. The powdery products melt partially and they merge together, forming a filmy end product when pressed by means of heat and pressure (see Figure 2). The product that is achieved by the invention is, generally, thermo-formable but not thermoplastic.

Their possible uses include composites and combinations, which contain the hydrophobized microfibrillated cellulose, according to the invention, such as polymer composites, purifying surfaces and matrix structures.
According to an especially preferred embodiment, the present MFC is a pure, modified product and not, for example, a polymeric composite product.

The following examples describe some preferred embodiments of the invention and their advantages.

### Examples

For the purpose of Example 1, a gel-like micro fibrillated cellulose is made from conventional cellulose by conventional methods, herein by means of enzyme treatments and mechanical grinding, and by pulverizing in water.

### Example 1 - Hydrophobization of microfibrillated cellulose

A dispersion of microfibrillated cellulose (150 g; solid matter content 1.66% by weight) and 130 mol % of octadecenyl succinic anhydride (OSA) that is dissolved in toluene; (21 g; 60 mmol) are added to a beaker flask, which is placed in a 105 °C oil bath. The mixture is refluxed at 85 °C for 48 h. After the refluxation, the product mixture is dewatered by means of azeotropic distillation. The solid product is washed four times at 100 ml of hot (>70 °C) toluene and the final product is stored as a toluene dispersion. The dry product is obtained by drying the toluene-bearing product in a vacuum at 60 °C for 4 h.

The same synthesis is carried out with OSA contents of 100 mol % (reagent: 16.2 g; 46.1 mmol), 60 mol % (reagent: 9.7 g; 27.6 mmol), 30 mol % (reagent: 4.8 g; 13.8 mmol), and 10 mol % (reagent: 1.6 g; 4.6 mmol), and with tetradecenyl succinic anhydride (TSA), in contents of 130 mol % (reagent; 17.6 g; 59.9 mmol) and 100 mol % (reagent: 13.6 g; 46.1 mmol).

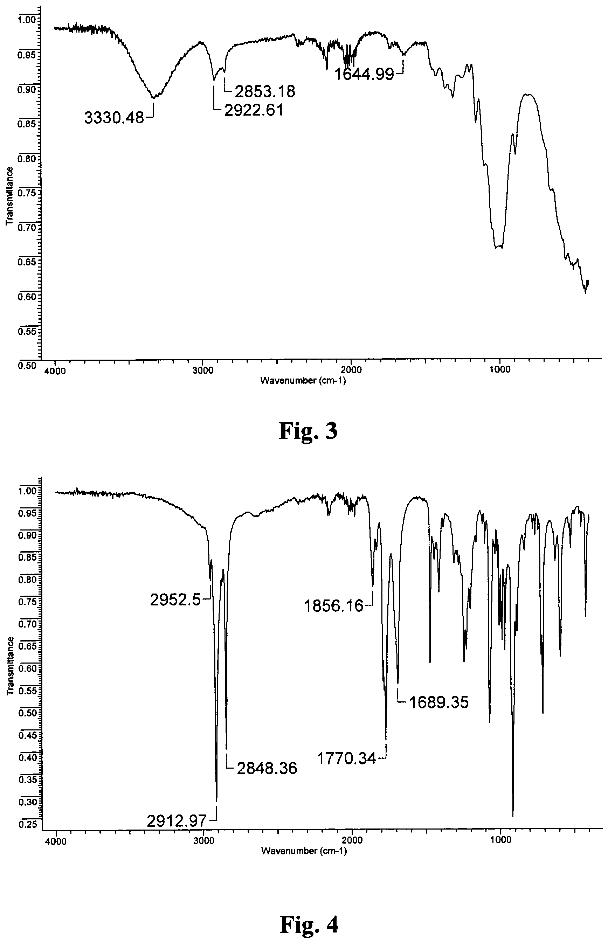

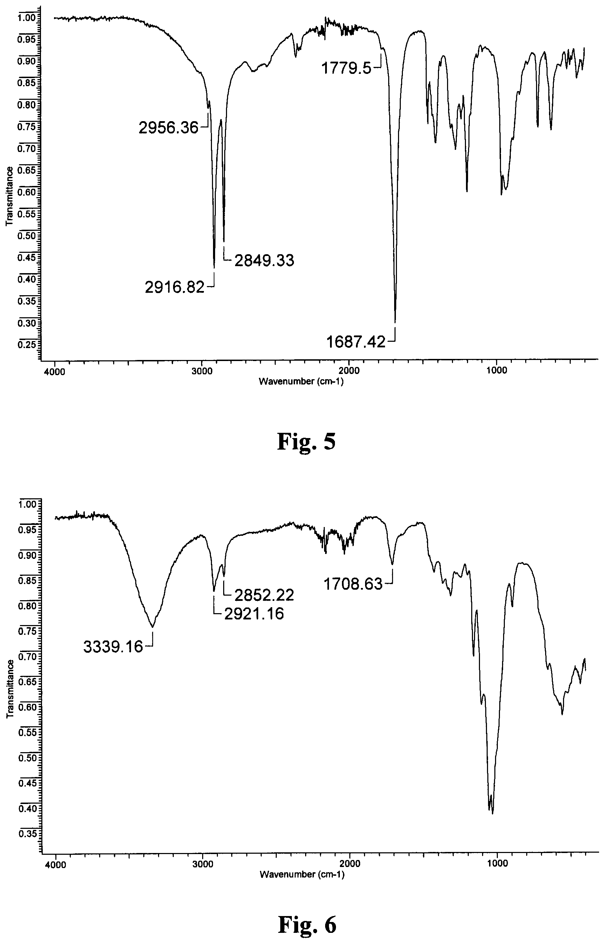

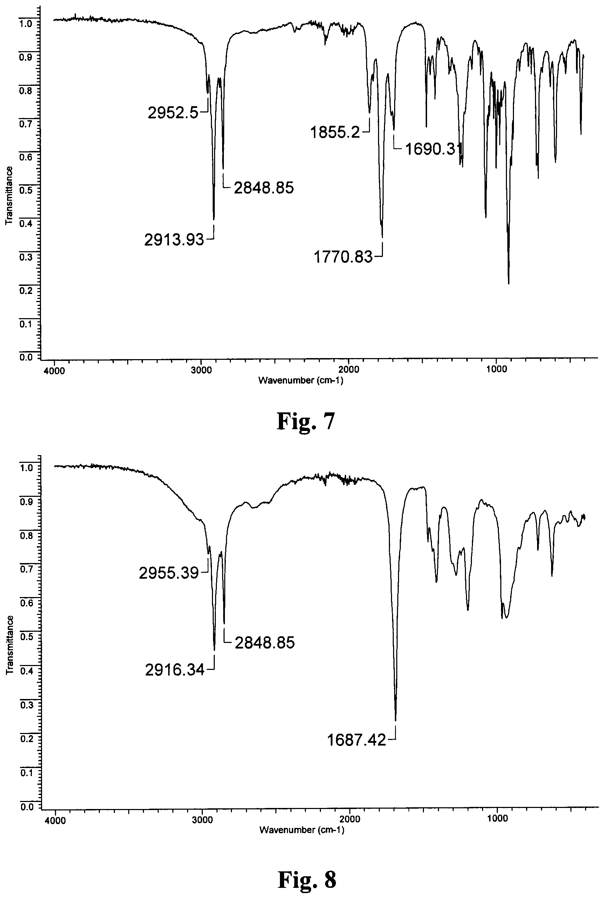

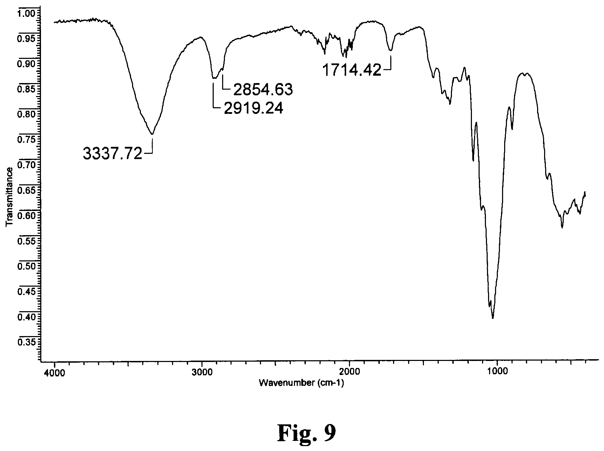

Both of the treating reagents and all of the reagent contents that were used yielded a strongly hydrophobic powdery product material (see Figure 2 for OSA). When using the same amount of reagent, the attachment of each one of the reagents essentially has the same degree of success (see Figures 3-6 for OSA and Figures 7-9 for TSA).

### Example 2 - After-treatment and analysis of the product hydrophobized with OSA

A product that is modified with OSA is selected. By means of IR spectroscopy, it is confirmed that the inert anhydride and the hydrolyzed diacid of OSA are removed by means of purification (compare Figures 3-6). The differential scanning calorimetry also indicates the same. After the purification, on the surface of the cellulose of the product, there are only alkenyl chains that are covalently attached to the cellulose through ester bonds.

To study the hydrophobicity of the product, sample surfaces are made from the purified products both by directly drying from the reaction mixture and by pressing at a temperature of 120 °C and a pressure of 150 kN. It can be observed that the behaviour of the product during the pressing differs from that of unmodified micro fibrillated cellulose which, for its part, also proves that the modification is successful. Contact angle measurements (Figure 2) confirm that, by means of the OSA modification, even a super hydrophobic material (0 > 150°) can be made from MFC by modification. When the product is pressed, the hydrophobicity decreases, but the material is still obviously hydrophobic. Our understanding is that the low surface energy of the material and the suitable microstructure of the surface together provide the superb hydrophobicity of the unpressed powdery MFC-OSA.

## Claims

1. A method of manufacturing hydrophobic micro fibrillated cellulose, wherein an organic hydrophobization reagent is reacted with the substituents on the surface of microfibrillated cellulose, **characterised by** carrying out the reaction in a reaction mixture, which is in the form of an aqueous dispersion, by using one or more alkenyl succinic anhydrides dissolved in or mixed with an organic solvent as the hydrophobization agent, and by carrying out an azeotropic distillation.

2. The method according to claim 1, wherein the organic solvent is selected from toluene, n-butyl acetate, pyridine and benzene.

3. The method according to Claim 1 or 2, wherein the organic solvent is toluene.

4. The method according to claim 3, wherein the alkenyl succinic anhydride is dissolved in or mixed with toluene before adding it to the reaction mixture.

5. The method according to any preceding claim, wherein the alkenyl succinic anhydride has a C8-C20 alkenyl chain.

6. The method according to claim 5, wherein the anhydride is octenyl succinic anhydride (C-8), dodecenyl succinic anhydride (C-12), tetradecenyl succinic anhydride (C-14) or octadecenyl succinic anhydride (C-18)

7. The method according to claim 5, wherein the anhydride is tetradecenyl succinic anhydride (C-14) or octadecenyl succinic anhydride (C-18)

8. The method according to claim 5, wherein the anhydride is octadecenyl succinic anhydride (C-18).

9. The method according to any preceding claim, wherein the hydrophobization reagent is reacted with the substituents on the surface of the microfibrillated cellulose, at least 70% of which, are OH groups.

10. The method according to any preceding claim, wherein the hydrophobization reagent is reacted with the substituents on the surface of the microfibrillated cellulose, 80-95% of which are OH groups.

11. The method according to any preceding claim, wherein the hydrophobization reagent is reacted with the substituents on the surface of the microfibrillated cellulose so that at least 10 mol %, of the reagent is added to the reaction mixture.

12. The method according to any preceding claim, wherein the hydrophobization reagent is reacted with the substituents on the surface of the microfibrillated cellulose so that 30-130 mol%, of the reagent is added to the reaction mixture.

13. The method according to any preceding claim, wherein the hydrophobization reagent is reacted with the substituents on the surface of the microfibrillated cellulose so that 30-60 mol-%, of the reagent is added to the reaction mixture.

14. The method according to any preceding claim, wherein ester bonds are formed in the reaction between the alkenyl chains and the OH groups on the surface of the cellulose.

## Patentansprüche

1. Verfahren zur Herstellung von hydrophober mikrofibrillierter Cellulose, wobei ein organisches Hydrophobierungsreagenz mit den Substituenten auf der Oberfläche von mikrofibrillierter Cellulose umgesetzt wird, **dadurch gekennzeichnet, dass** die Umsetzung in einem Reaktionsgemisch, das in Form einer wässrigen Dispersion vorliegt, unter Verwendung eines oder mehrerer Alkenylbernsteinsäureanhydride, die in einem organischen Lösungsmittel gelöst oder mit diesem gemischt sind, als Hydrophobierungsmittel durchgeführt wird und eine azeotrope Destillation durchgeführt wird.

2. Verfahren nach Anspruch 1, wobei das organische Lösungsmittel aus Toluol, n-Butylacetat, Pyridin und Benzol ausgewählt ist.

3. Verfahren nach Anspruch 1 oder 2, wobei das organische Lösungsmittel Toluol ist.

4. Verfahren nach Anspruch 3, wobei das Alkenylbernsteinsäureanhydrid vor der Zugabe zum Reaktionsgemisch in Toluol gelöst oder mit diesem gemischt wird.

5. Verfahren nach einem vorstehenden Anspruch, wobei das Alkenylbernsteinsäureanhydrid eine C8-C20-Alkenylkette aufweist.

6. Verfahren nach Anspruch 5, wobei das Anhydrid Octenylbernsteinsäureanhydrid (C-8), Dodecenylbernsteinsäureanhydrid (C-12), Tetradecenylbernsteinsäureanhydrid (C-14) oder Octadecenylbernsteinsäureanhydrid (C-18) ist.

7. Verfahren nach Anspruch 5, wobei das Anhydrid Tetradecenylbernsteinsäureanhydrid (C-14) oder Octadecenylbernsteinsäureanhydrid (C-18) ist.

8. Verfahren nach Anspruch 5, wobei das Anhydrid Octadecenylbernsteinsäureanhydrid (C-18) ist.

9. Verfahren nach einem vorstehenden Anspruch, wobei das Hydrophobierungsreagenz mit den Substituenten auf der Oberfläche der mikrofibrillierten Cellulose, von denen mindestens 70% OH-Gruppen sind, umgesetzt wird.

10. Verfahren nach einem vorstehenden Anspruch, wobei das Hydrophobierungsreagenz mit den Substituenten auf der Oberfläche der mikrofibrillierten Cellulose, von denen 80-95% OH-Gruppen sind, umgesetzt wird.

11. Verfahren nach einem vorstehenden Anspruch, wobei das Hydrophobierungsreagenz mit den Substituenten auf der Oberfläche der mikrofibrillierten Cellulose umgesetzt wird, so dass mindestens 10 Mol-% des Reagenzes dem Reaktionsgemisch zugesetzt werden.

12. Verfahren nach einem vorstehenden Anspruch, wobei das Hydrophobierungsreagenz mit den Substituenten auf der Oberfläche der mikrofibrillierten Cellulose umgesetzt wird, so dass 30-130 Mol-% des Reagenzes dem Reaktionsgemisch zugesetzt werden.

13. Verfahren nach einem vorstehenden Anspruch, wobei das Hydrophobierungsreagenz mit den Substituenten auf der Oberfläche der mikrofibrillierten Cellulose umgesetzt wird, so dass 30-60 Mol-% des Reagenzes dem Reaktionsgemisch zugesetzt werden.

14. Verfahren nach einem vorstehenden Anspruch, wobei bei der Reaktion zwischen den Alkenylketten und den OH-Gruppen auf der Oberfläche der Cellulose Esterbindungen gebildet werden.

## Revendications

1. Procédé de fabrication de cellulose microfibrillée hydrophobe, dans lequel un réactif d'hydrophobisation organique est mis à réagir avec les substituants à la surface de la cellulose microfibrillée, **caractérisé en ce que** la réaction est réalisée dans un mélange réactionnel, qui est sous la forme d'une dispersion aqueuse, en utilisant un ou plusieurs anhydrides alcénylsucciniques dissous dans ou mélangés avec un solvant organique en tant que réactif d'hydrophobisation, et en réalisant une distillation azéotropique.

2. Procédé selon la revendication 1, dans lequel le solvant organique est choisi parmi le toluène, l'acétate de n-butyle, la pyridine et le benzène.

3. Procédé selon la revendication 1 ou 2, dans lequel le solvant organique est le toluène.

4. Procédé selon la revendication 3, dans lequel l'anhydride alcénylsuccinique est dissous dans ou mélangé avec le toluène avant de l'ajouter au mélange réactionnel.

5. Procédé selon l'une quelconque des revendications précédentes, dans lequel l'anhydride alcénylsuccinique présente une chaîne alcényle en C8-C20.

6. Procédé selon la revendication 5, dans lequel l'anhydride est l'anhydride octénylsuccinique (C-8), l'anhydride dodécénylsuccinique (C-12), l'anhydride tétradécénylsuccinique (C-14) ou l'anhydride octadécénylsuccinique (C-18).

7. Procédé selon la revendication 5, dans lequel l'anhydride est l'anhydride tétradécénylsuccinique (C-14) ou l'anhydride octadécénylsuccinique (C-18).

8. Procédé selon la revendication 5, dans lequel l'anhydride est l'anhydride octadécénylsuccinique (C-18).

9. Procédé selon l'une quelconque des revendications précédentes, dans lequel le réactif d'hydrophobisation est mis à réagir avec les substituants à la surface de la cellulose microfibrillée, dont au moins 70 %, sont des groupes OH.

10. Procédé selon l'une quelconque des revendications précédentes, dans lequel le réactif d'hydrophobisation est mis à réagir avec les substituants à la surface de la cellulose microfibrillée, dont 80 à 95 % sont des groupes OH.

11. Procédé selon l'une quelconque des revendications précédentes, dans lequel le réactif d'hydrophobisation est mis à réagir avec les substituants à la surface de la cellulose microfibrillée de sorte qu'au moins 10% en moles, du réactif est ajouté au mélange réactionnel.

12. Procédé selon l'une quelconque des revendications précédentes, dans lequel le réactif d'hydrophobisation est mis à réagir avec les substituants à la surface de la cellulose microfibrillée de sorte que 30 à 130 % en moles, du réactif est ajouté au mélange réactionnel.

13. Procédé selon l'une quelconque des revendications précédentes, dans lequel le réactif d'hydrophobisation est mis à réagir avec les substituants à la surface de la cellulose microfibrillée de sorte que 30 à 60% en moles, du réactif est ajouté au mélange réactionnel.

14. Procédé selon l'une quelconque des revendications précédentes, dans lequel des liaisons ester sont formées dans la réaction entre les chaînes alcényles et les groupes OH à la surface de la cellulose.
